(19)

Europäisches Patentamt

European Patent Office

Office européen des brevets

(11) **EP 2 958 289 A1**

(12) **EUROPEAN PATENT APPLICATION**

(43) Date of publication:
**23.12.2015 Bulletin 2015/52**

(51) Int Cl.:
$H04L\ 25/03^{(2006.01)}$      $H04L\ 25/497^{(2006.01)}$

(21) Application number: **14305957.4**

(22) Date of filing: **20.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
 • **Guenach, Mamoun**
  **2018 Antwerpen (BE)**
 • **Kozicki, Bartlomiej**
  **2018 Antwerpen (BE)**

(74) Representative: **ALU Antw Patent Attorneys**
 **Intellectual Property and Standards**
 **Copernicuslaan 50**
 **2018 Antwerp (BE)**

(54) **Precoding method and device for partial response modulation**

(57) Embodiments relate to a method for precoding K input streams of input symbols ($a^{(u)}_n$) into K output streams of output symbols ($b^{(u)}_n$) for multiplexed serial transmission of the output symbols ($b^{(u)}_n$) into a partial response modulation channel (10) represented by a line coding filter of $L_c$ taps denoted $g_i$, with i comprised in the range [1, $L_c$], wherein the input symbols and the output symbols are selected from an alphabet of size L, wherein $a^{(u)}_n$ denotes the $n^{th}$ input symbol of the $u^{th}$ input stream and $b^{(u)}_n$ denotes the $n^{th}$ output symbol of the $u^{th}$ output stream, with u comprised in the range [0, K-1].

FIG. 1

EP 2 958 289 A1

**Description**

FIELD OF THE INVENTION

The present invention relates to the field of telecommunications. In particular, the present invention relates to a precoding method and a precoding device for partial response modulation.

BACKGROUND

Some high-speed (multi-ten Gbps) end-to-end serial transmission systems employ a form of partial response modulation for conveying signals (electrical or optical) over the physical medium. A partial response modulation is an extension of the direct response modulation (such as non-return-to-zero(NRZ)) where bit information is distributed over two or more symbols transmitted over the medium. Such partial-response systems have the advantage that for the same symbol rate their power spectral density (PSD), or occupied frequency spectrum, is narrower than that of the direct-response modulation. As a result, higher symbol rates (and effectively bit rates) can be achieved over the same class of transmission medium or the same symbol rate can be achieved over a lower class (less expensive) of transmission medium. Partial response modulation typically employs precoding at the transmission side. This operation allows symbol-by-symbol direct detection without the threat of errors propagating across multiple symbols at the receiver.

In an end-to-end high-speed transmission system, the high-speed serial rate is used for interconnecting chips or modules collocated on the same board or spread between different boards. Within the aforementioned chip or module the signaling rates are lower and require parallel to serial conversion in order to match the line rate outside of chip/module. This is typically realized using a multiplexer, which sequentially reads data on multiple inputs and places that data serially on the output port in time slots which are N/M times shorter than the input time slots. In the above M is the data line rate inside the chip/module, while N is the data line rate outside the chip/module.

In this context, in order to realize an end-to-end system employing partial response modulation, one solution is to multiplex the input symbols, then to precode the multiplexed stream. This has the problem that the precoder must operate at the high rate of the multiplexed stream, which involves difficulties in making 1-bit delay of the precoder. Another solution is the use of a multi-lane partial response precoder before the multiplexer in order to ensure that errors do not propagate at the receiver side and that the demultiplexed data is equivalent to the data at the input of the system. Such multilane precoders have been proposed for two or four lanes and duobinary modulation. However, the proposed design are complex and requires numerous gates. Moreover, there is no known solution for a general case of precoding for an arbitrary number of input lanes and arbitrary partial response modulation format.

SUMMARY

It is thus an object of embodiments of the present invention to propose a precoding method and a precoding device, which do not show the inherent shortcomings of the prior art.

Accordingly, embodiments relate to a method for precoding K input streams of input symbols into K output streams of output symbols for multiplexed serial transmission of the output symbols into a partial response modulation channel represented by a line coding filter of $L_c$ taps denoted $g_i$, with i comprised in the range $[1, L_c]$,

wherein the input symbols and the output symbols are selected from an alphabet of size L,

wherein $a^{(u)}_n$ denotes the $n^{th}$ input symbol of the $u^{th}$ input stream and $b^{(u)}_n$ denotes the $n^{th}$ output symbol of the $n^{th}$ output stream, with u comprised in the range $[0, K-1]$, wherein $u_I$ is the integer value after division of the stream number u by the length $L_c$ of the partial response:

$$u_I = \left\lfloor \frac{u}{L_c} \right\rfloor$$

and wherein $\alpha_I$ is the integer value of the difference between the length $L_c$ of the partial response and the stream number u divided by the number of streams K:

$$\alpha_I = \left\lfloor \frac{L_c - u}{K} \right\rfloor$$

the method being executed by a precoder and comprising:

for the output streams u wherein $u_I > 0$, determining the $n^{th}$ output symbols $b^u_n$ as:

$$b_n^{(u)} = a_n^{(u)} \oplus_L \sum_{l=1}^{Lc} g_l b_n^{(u-l)}$$

for the output streams u wherein $u_I = 0$ and $\alpha_I = 0$, determining the $n^{th}$ output symbols $b^u_n$ as:

$$b_n^{(u)} = a_n^{(u)} \oplus_L \sum_{l=1}^{u} g_l b_n^{(u-l)} \oplus_L \sum_{l=u+1}^{Lc} g_l b_{n-1}^{(K-1-(l-u-1))}$$

and for the output streams u wherein $u_I = 0$ and $a_I > 0$, determining the $n^{th}$ output symbols $b^u_n$ as:

$$b_n^{(u)} = a_n^{(u)} \oplus_L \sum_{l=1}^{u} g_l b_n^{(u-l)}$$

$$\oplus_L \sum_{i=1}^{\alpha_I} \sum_{l=0}^{K-1} g_{l+u+1+(i-1)K} b_{n-i}^{(K-1-l)} \oplus_L \sum_{l=0}^{\alpha_F - 1} g_{l+u+1+\alpha_I K} b_{n-\alpha_I - 1}^{(K-1-l)}$$

wherein $\oplus_L$ denotes the modulo L operation.

Correspondingly, embodiments relate to a precoder for precoding K input streams of input symbols into K output streams of output symbols for multiplexed serial transmission of the output symbols into a partial response modulation channel represented by a line coding filter of $L_c$ taps denoted $g_i$, with i comprised in the range [1, $L_c$], wherein the input symbols and the output symbols are selected from an alphabet of size L, wherein $a^{(u)}_n$ denotes the $n^{th}$ input symbol of the $u^{th}$ input stream and $b^{(u)}_n$ denotes the $n^{th}$ output symbol of the $u^{th}$ output stream, with u comprised in the range [0, K-1], wherein $u_I$ is the integer value after division of the stream number u by the length $L_c$ of the partial response:

$$u_I = \left\lfloor \frac{u}{L_c} \right\rfloor$$

and wherein $\alpha_I$ is the integer value of the difference between the length $L_c$ of the partial response and the stream number u divided by the number of streams K:

$$\alpha_I = \left\lfloor \frac{L_c - u}{K} \right\rfloor$$

the precoder being configured for:
for the output streams u wherein $u_I > 0$, determining the $n^{th}$ output symbols $b^u_n$ as:

$$b_n^{(u)} = a_n^{(u)} \oplus_L \sum_{l=1}^{Lc} g_l b_n^{(u-l)}$$

for the output streams u wherein $u_I = 0$ and $\alpha_I = 0$, determining the $n^{th}$ output symbols $b^u_n$ as:

$$b_n^{(u)} = a_n^{(u)} \oplus_L \sum_{l=1}^{u} g_l b_n^{(u-l)} \oplus_L \sum_{l=u+1}^{Lc} g_l b_{n-1}^{(K-1-(l-u-1))}$$

and for the output streams u wherein $u_l = 0$ and $\alpha_l > 0$, determining the n$^{th}$ output symbols $b^u_n$ as:

$$b_n^{(u)} = a_n^{(u)} \oplus_L \sum_{l=1}^{u} g_l b_n^{(u-l)}$$

$$\oplus_L \sum_{i=1}^{\alpha_I} \sum_{l=0}^{K-1} g_{l+u+1+(i-1)K} b_{n-i}^{(K-1-l)} \oplus_L \sum_{l=0}^{\alpha_F-1} g_{l+u+1+\alpha_I K} b_{n-\alpha_I-1}^{(K-1-l)}$$

wherein $\oplus_L$ denotes the modulo L operation.

In an embodiment, K=4, L=2 and the partial response modulation channel is a duobinary modulation channel with $L_c = 1$ and $g_1 = 1$. In another embodiment, K=4, L=2, and the partial response modulation channel is characterized with $L_c > 1$ filter taps. In an embodiment, K=4, L=4, and the partial response modulation channel is a double duobinary modulation channel with $L_c = 2$.

In an embodiment:

- K is different from 4 and L is different from 2 and $L_c$ is different from 1, and
- K is different from 2 and L is different from 2 and $L_c$ is different from 1.

Embodiments also relate to a method for transmitting K input streams of input symbols through a partial response modulation channel represented by a line coding filter of $L_c$ taps denoted $g_i$, with i comprised in the range [1, $L_c$], comprising:

- precoding the K input streams of input symbols into K output streams of output symbols according to the method above,
- multiplexing the output symbols for serial transmission into the partial response modulation channel.

Correspondingly, embodiments relate to a source device for transmitting K input streams of input symbols to a destination device through a partial response modulation channel represented by a line coding filter of $L_c$ taps denoted $g_i$, with i comprised in the range [1, $L_c$], comprising:

- a precoder as described above for precoding the K input streams of input symbols into K output streams of output symbols,
- a multiplexer for multiplexing the output symbols for serial transmission into the partial response modulation channel.

The partial response modulation channel may comprise a preequalization filter and a physical medium channel.
Embodiments also relate to a computer program comprising instructions for performing one of the methods mentioned before when said instructions are executed by a computer.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 shows a system for high speed serial transmission of multiple input streams, and
Figures 2, 3 and 4 show respective examples of the precoder of the system of Figure 1.

DESCRIPTION OF EMBODIMENTS

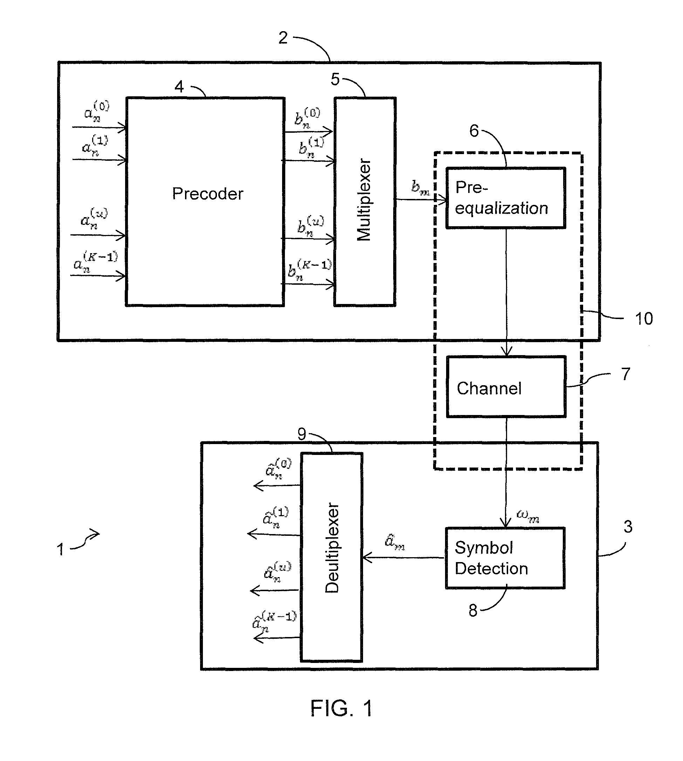

**Figure 1** shows a system 1 for high speed serial transmission of multiple input streams. The system 1 comprises a source device 2 and a destination device 3 connected by a physical medium channel 7. In this context, "high speed" means that the symbol rate N on the physical medium channel 7 is higher than the symbol rate M of the respective streams within the source device 2 and the destination device 3.

The source device 2 comprises a precoder 4, a multiplexer 5 and a preequalization filter 6.

The precoder 2 precodes K input streams of input symbols into K output streams of output symbols. Here, $a^{(u)}_n$ denotes the $n^{th}$ input symbol of the $u^{th}$ input stream and $b^{(u)}_n$ denotes the $n^{th}$ output symbol of the $u^{th}$ output stream, with u comprised in the range [0, K-1]. The input symbols and the output symbols are selected from an alphabet $\Omega_a$ of size L. For example, L = 2 and the input symbols and the output symbols are bits.

The multiplexer 5 performs a parallel/serial conversion of the K output streams from the precoder 2, and outputs a serial stream of symbols $b_m$:

$$\cdots b^{(K-2)}_{n-1} b^{(K-1)}_{n-1} b^{(0)}_n b^{(1)}_n b^{(2)}_n b^{(3)}_n \cdots b^{(K-1)}_n b^{(0)}_{n+1} b^{(1)}_{n+1} \cdots$$

Here, $b_m$ denotes the successive symbols of the stream output by the multiplexer 5, regardless of the stream number u.

The stream of symbols $b_m$ output by the multiplexer 5 is transmitted to the destination device 3 through a partial response modulation channel 10. The partial response modulation channel 10 is equivalent to a line coding filter of $L_c$ taps denoted $g_i$, with i comprised in the range [1, $L_c$]. We refer to duobinary (DB) modulation for $L_c$ = 1 with $g_1$ = 1, and to double duobinary modulation for $L_c$ = 2, $g_1$ = 2 and $g_2$ = 1. The partial response modulation of a line coding filter of $L_c$ taps may be expressed by a polynomial expression. For example, $1 + z^{-1}$ is the polynomial expression for duobinary (DB) modulation, and $1+2z^{-1}+z^{-2}$ is the polynomial expression for double duobinary (DDB) modulation.

In the example of Figure 1, the partial response modulation channel 10 is an equivalent channel comprising the pre-equalization filter 6 and the physical medium channel 7. However, in other embodiments, partial response modulation may be obtained with other schemes, for example post-equalization is another option, and pre-equalization and post-equalization is yet another option. In another example, partial response modulation is imposed within the source device 3 and the equivalent channel is assumed to be a flat additive with Gaussian noise channel. The physical medium channel 7 may be for example a wireline or an optical transmission line. The symbols $b_m$ may be sent in the partial response modulation channel 10 based on pulse amplitude modulation with L available amplitudes (PAM-L), for example PAM-2 for bits or PAM-4 for an alphabet $\Omega_a$ of 4 symbols. The destination device 3 comprises a symbol detector 8 and a demultiplexer 9.

The symbol detector 8 performs time recovery, symbol detection and demodulation. Symbol detection outputs a stream of detected symbols $w_m$:

$$\cdots \omega^{(K-2)}_{n-1} \omega^{(K-1)}_{n-1} \omega^{(0)}_n \omega^{(1)}_n \omega^{(2)}_n \omega^{(3)}_n \cdots \omega^{(K-1)}_n$$

Here, $\omega_m$ denotes the successive detected symbols, regardless of the stream number u.

Demodulation is performed by modulo L operation (Remember that L is the size of the alphabet $\Omega_a$): $\hat{a}_m = \oplus_L \omega_m$. Here, $\hat{a}_m$ denotes the successive demodulated symbols, regardless of the stream number u.

Finally, the demultiplexer 9 performs a serial/parallel conversion of the demodulated symbols $\hat{a}_m$ output by the symbol detector 8, and outputs K streams with symbols $\hat{a}^{(0)}_n$ through $\hat{a}^{(K-1)}_n$.

We now describe the precoding performed by the precoder 4 in more detail.

The signal level resulting from the line coding of the stream ($b_m$) after the parallel to serial multiplexer 5 is:

$$\omega_m = b_m + \sum_{l=1}^{Lc} g_l\, b_{m-l}$$

In order to be able to infer the input symbols ($\hat{a}_m$) from the signal levels ($\omega_m$) with modulo *L* operation $a_m = \oplus_L \omega_m$, the former should be precoded as:

$$b_m = a_m \oplus_L \sum_{l=1}^{Lc} g_l b_{m-l}$$

Depending on the relative number of input data streams $K$ and the length of response $L_c$, a number of cases can be identified. Assuming the following parameters for a given data stream $u = 0 \cdots K - 1$:

$$u_I = \left\lfloor \frac{u}{L_c} \right\rfloor$$

$$\alpha_I = \left\lfloor \frac{L_c - u}{K} \right\rfloor$$

where $\lfloor . \rfloor$ is the flooring operator, $u_I$ is the integer value after division of the stream number u by the length $L_c$], of the partial response, and $\alpha_I$ is the integer value indicating whether output of the precoder 4 depends only on current symbols $b^{(u)}_n$ or also past symbols $b^{(u)}_{n-1}$, $b^{(u)}_{n-2}\cdots$

The cases are defined by the relative values of $u_I$ and $a_I$:

In a first case, we have $u_I > 0$. Accordingly, the partial response modulation only involves symbols $b^{(u)}_n$ with the same index n:

$$\omega_n^{(u)} = b_n^{(u)} + \sum_{l=1}^{Lc} g_l b_n^{(u-l)}$$

Thus, the precoding only involves symbols $b_n^{(u-l)}$ which correspond to precoder outputs with the same symbol index 'n':

$$b_n^{(u)} = a_n^{(u)} \oplus_L \sum_{l=1}^{Lc} g_l b_n^{(u-l)}$$

In a second case, we have $u_I = 0$ and $\alpha_I = 0$. Accordingly, the partial response modulation involves symbols $b^{(u)}_n$ with the same index n and the index "n-1":

$$\omega_n^{(u)} = b_n^{(u)} + \sum_{l=1}^{u} g_l b_n^{(u-l)} + \sum_{l=u+1}^{Lc} g_l b_{n-1}^{(K-1-(l-u-1))}$$

Thus, the precoding involves symbols $b_n^{(u-l)}$ which correspond to precoder outputs with the same symbol index '$n$' and previous symbols $b_{n-1}^{(K-1-(l-u-1))}$ which correspond to precoder outputs with the symbol index '$n$-1':

$$b_n^{(u)} = a_n^{(u)} \oplus_L \sum_{l=1}^{u} g_l b_n^{(u-l)} \oplus_L \sum_{l=u+1}^{Lc} g_l b_{n-1}^{(K-1-(l-u-1))}$$

Finally, in a third case, we have $u_I = 0$ and $\alpha_I > 0$. Accordingly, the partial response modulation involve involves symbols corresponding to current and previous symbols reaching back into the past up to $b_{n-\alpha_I-1}^{(K-1-l)}$ precoder outputs:

$$\omega_n^{(u)} = b_n^{(u)} + \sum_{l=1}^{u} g_l b_n^{(u-l)} + \sum_{i=1}^{\alpha_I} \sum_{l=0}^{K-1} g_{l+u+1+(i-1)K} b_{n-i}^{(K-1-l)}$$
$$+ \sum_{l=0}^{\alpha_F-1} g_{l+u+1+\alpha_I K} b_{n-\alpha_I-1}^{(K-1-l)}$$

Thus, correspondingly, the precoding involves symbols corresponding to current and previous symbols reaching back into the past up to $b_{n-\alpha_I-1}^{(K-1-l)}$ precoder outputs:

$$b_n^{(u)} = a_n^{(u)} \oplus_L \sum_{l=1}^{u} g_l b_n^{(u-l)}$$

$$\oplus_L \sum_{i=1}^{\alpha_I} \sum_{l=0}^{K-1} g_{l+u+1+(i-1)K} b_{n-i}^{(K-1-l)}$$

$$\oplus_L \sum_{l=0}^{\alpha_F-1} g_{l+u+1+\alpha_I K} b_{n-\alpha_I-1}^{(K-1-l)}$$

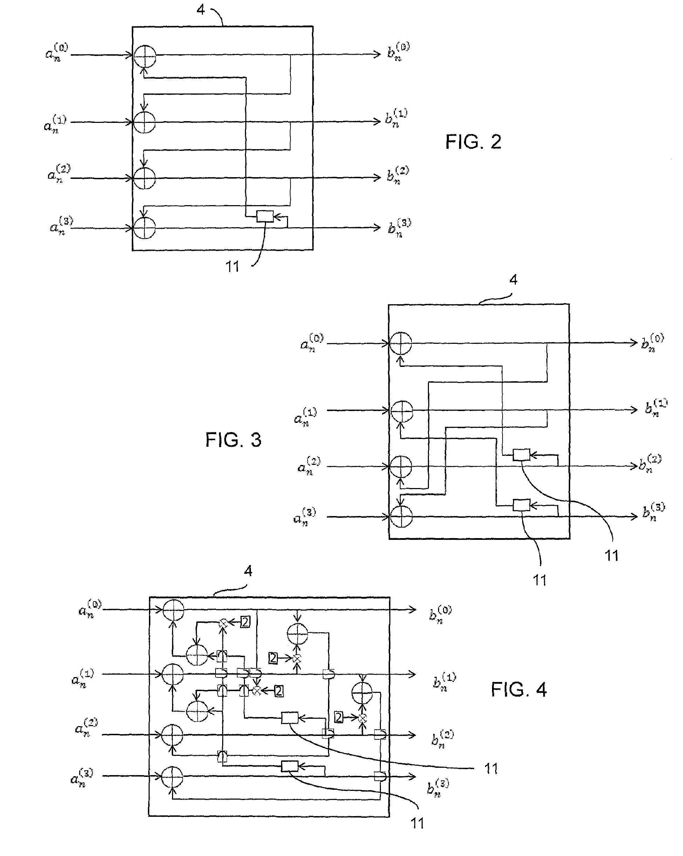

By applying the precoding described above, a precoder 4 suitable for any number of input streams K, any alphabet size L and any type of partial response modulation represented by a line coding filter of $L_c$ taps $g_i$ may be designed. Figures 2 to 4 give specific example of precoders 4.
**Figure 2** shows a precoder 4 for four input streams (K=4) of bits (L=2) and duobinary (DB) modulation (that is $L_c = 1$ and $g_1 = 1$). Applying the precoding described above, we have:

$$b_n^{(0)} = a_n^{(0)} \oplus_2 b_{n-1}^{(3)}$$

$$b_n^{(1)} = a_n^{(1)} \oplus_2 b_n^{(0)}$$

$$b_n^{(2)} = a_n^{(2)} \oplus_2 b_n^{(1)}$$

$$b_n^{(3)} = a_n^{(3)} \oplus_2 b_n^{(2)}$$

In this embodiment, the output symbols $b_n^{(1)}$ through $b_n^{(3)}$ of the precoder 4 are precoded using only current binary inputs and current outputs. The output symbol $b_n^{(0)}$ of the precoder 4 requires the knowledge of current input and previous output symbol $b_{n-1}^{(3)}$ as indicated in Fig. 2 by the delay box 11.

The multiplexed stream is $b_{n-1}^{(2)} b_{n-1}^{(3)} b_n^{(0)} b_n^{(1)} b_n^{(2)} b_n^{(3)} b_{n+1}^{(0)} b_{n+1}^{(1)}$

**Figure 3** shows a precoder 4 for four input streams (K=4) of bits (L=2) and polybinary modulation (with $L_c = 2$, $g_1 = 0$ and $g_2 = -1$ in this example). Applying the precoding described above, we have:

$$b_n^{(0)} = a_n^{(0)} \oplus_2 b_{n-1}^{(2)}$$

$$b_n^{(1)} = a_n^{(1)} \oplus_2 b_{n-1}^{(3)}$$

$$b_n^{(2)} = a_n^{(2)} \oplus_2 b_n^{(0)}$$

$$b_n^{(3)} = a_n^{(3)} \oplus_2 b_n^{(1)}$$

In this embodiment, the output symbols $b_n^{(2)}$ and $b_n^{(3)}$ of the precoder 4 are precoded using only current binary inputs and current outputs. The output symbol $b_n^{(0)}$ and $b_n^{(1)}$ of the precoder 4 requires the knowledge of current binary input and previous output symbol $b_{n-1}^{(2)}$ and $b_{n-1}^{(3)}$, respectively, as indicated by the delay boxes 11 of Figure 3.

**Figure 4** shows a precoder 4 for four input streams (K=4) of 4-level symbols (L=4) and double duobinary modulation (in other words, with $L_c = 2$, $g_1 = 2$ and $g_2 = 1$). Applying the precoding described above, we have:

$$b_n^{(0)} = a_n^{(0)} \oplus_4 \left[ 2 \cdot b_{n-1}^{(3)} \oplus_L b_{n-1}^{(2)} \right]$$

$$b_n^{(1)} = a_n^{(1)} \oplus_4 \left[ 2 \cdot b_n^{(0)} \oplus_L b_{n-1}^{(3)} \right]$$

$$b_n^{(2)} = a_n^{(2)} \oplus_4 \left[ 2 \cdot b_n^{(1)} \oplus_L b_n^{(0)} \right]$$

$$b_n^{(3)} = a_n^{(3)} \oplus_4 \left[ 2 \cdot b_n^{(2)} \oplus_L b_n^{(1)} \right]$$

In this embodiment, the output symbols $b_n^{(0)}$ and $b_n^{(1)}$ of the precoder 4 are precoded using current inputs, current outputs and past outputs. Multiplication of output value by a factor 2 reflects the component 2 of the generating function, as indicated in Fig. 4.

In an embodiment, K is different from 4 and L is different from 2 and $L_c$], is different from 1. In another embodiment, K is different from 2 and L is different from 2 and $L_c$], is different from 1.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for precoding K input streams of input symbols $(a^{(u)}_n)$ into K output streams of output symbols $(b^{(u)}_n)$ for multiplexed serial transmission of the output symbols $(b^{(u)}_n)$ into a partial response modulation channel (10) represented by a line coding filter of $L_c$ taps denoted $g_i$, with i comprised in the range $[1, L_c]$,

   wherein the input symbols and the output symbols are selected from an alphabet of size L,

   wherein $a^{(u)}_n$ denotes the $n^{th}$ input symbol of the $n^{th}$ input stream and $b^{(u)}_n$ denotes the $n^{th}$ output symbol of the $n^{th}$ output stream, with u comprised in the range $[0, K-1]$, wherein $u_I$ is the integer value after division of the stream number u by the length $L_c$ of the partial response:

$$u_I = \left\lfloor \frac{u}{L_c} \right\rfloor$$

   and wherein $\alpha_I$ is the integer value of the difference between the length $L_c$ of the partial response and the stream number u divided by the number of streams K:

$$\alpha_I = \left\lfloor \frac{L_c - u}{K} \right\rfloor$$

   the method being executed by a precoder (4) and comprising:

   for the output streams u wherein $u_I > 0$, determining the $n^{th}$ output symbols $b^u_n$ as:

$$b^{(u)}_n = a^{(u)}_n \oplus_L \sum_{l=1}^{Lc} g_l b^{(u-l)}_n$$

   for the output streams u wherein $u_I = 0$ and $a_I = 0$, determining the $n^{th}$ output symbols $b^u_n$ as:

$$b^{(u)}_n = a^{(u)}_n \oplus_L \sum_{l=1}^{u} g_l b^{(u-l)}_n \oplus_L \sum_{l=u+1}^{Lc} g_l b^{(K-1-(l-u-1))}_{n-1}$$

   and for the output streams u wherein $u_I = 0$ and $\alpha_I > 0$, determining the $n^{th}$ output symbols $b^u_n$ as:

$$b^{(u)}_n = a^{(u)}_n \oplus_L \sum_{l=1}^{u} g_l b^{(u-l)}_n$$

$$\oplus_L \sum_{i=1}^{\alpha_I} \sum_{l=0}^{K-1} g_{l+u+1+(i-1)K} b_{n-i}^{(K-1-l)} \oplus_L \sum_{l=0}^{\alpha_F-1} g_{l+u+1+\alpha_I K} b_{n-\alpha_I-1}^{(K-1-l)}$$

wherein $\oplus_L$ denotes the modulo L operation.

2. Method according to claim 1, wherein K=4, L=2 and the partial response modulation channel (10) is a duobinary modulation channel with $L_c = 1$ and $g_1 = 1$.

3. Method according to claim 1, wherein K=4, L=2, and the partial response modulation channel (10) is characterized with $L_c > 1$ filter taps.

4. Method according to claim 1, wherein K=4, L=4, and the partial response modulation (10) channel is a double duobinary modulation channel with $L_c > 1$.

5. Method according claim 1, wherein

    - K is different from 4 and L is different from 2 and $L_c$ is different from 1, and
    - K is different from 2 and L is different from 2 and $L_c$ is different from 1.

6. Method for transmitting K input streams of input symbols ($a^{(u)}_n$) through a partial response modulation channel (10) represented by a line coding filter of $L_c$ taps denoted $g_i$, with i comprised in the range [1, $L_c$], comprising:

    - precoding the K input streams of input symbols ($a^{(u)}_n$) into K output streams of output symbols ($b^{(u)}_n$) according to the method of one of claims 1 to 5,
    - multiplexing the output symbols ($b^{(u)}_n$) for serial transmission into the partial response modulation channel (10).

7. Method according to claim 6, wherein the partial response modulation channel (10) comprises a pre-equalization filter (6) and a physical medium channel (7).

8. Computer Program comprising instructions executable by a processor for performing the method for precoding according to one of claims 1 to 5 when said instructions are executed by a computer.

9. Precoder (4) for precoding K input streams of input symbols ($a^{(u)}_n$) into K output streams of output symbols ($b^{(u)}_n$) for multiplexed serial transmission of the output symbols ($b^{(u)}_n$) into a partial response modulation channel (10) represented by a line coding filter of $L_c$ taps denoted $g_i$, with i comprised in the range [1, $L_c$], wherein the input symbols and the output symbols are selected from an alphabet of size L, wherein $a^{(u)}_n$ denotes the $n^{th}$ input symbol of the $n^{th}$ input stream and $b^{(u)}_n$ denotes the $n^{th}$ output symbol of the $u^{th}$ output stream, with u comprised in the range [0, K-1], wherein $u_I$ is the integer value after division of the stream number u by the length $L_c$ of the partial response:

$$u_I = \left\lfloor \frac{u}{L_c} \right\rfloor$$

and wherein $\alpha_I$ is the integer value of the difference between the length $L_c$ of the partial response and the stream number u divided by the number of streams K:
the precoder being configured for:

$$\alpha_I = \left\lfloor \frac{L_c - u}{K} \right\rfloor$$

for the output streams u wherein $u_I > 0$, determining the $n^{th}$ output symbols $b^u_n$ as:

$$b_n^{(u)} = a_n^{(u)} \oplus_L \sum_{l=1}^{Lc} g_l b_n^{(u-l)}$$

for the output streams u wherein $u_l = 0$ and $\alpha_l = 0$, determining the $n^{th}$ output symbols $b^u_n$ as:

$$b_n^{(u)} = a_n^{(u)} \oplus_L \sum_{l=1}^{u} g_l b_n^{(u-l)} \oplus_L \sum_{l=u+1}^{Lc} g_l b_{n-1}^{(K-1-(l-u-1))}$$

and for the output streams u wherein $u_l = 0$ and $\alpha_l > 0$, determining the $n^{th}$ output symbols $b^u_n$ as:

$$b_n^{(u)} = a_n^{(u)} \oplus_L \sum_{l=1}^{u} g_l b_n^{(u-l)}$$

$$\oplus_L \sum_{i=1}^{\alpha_I} \sum_{l=0}^{K-1} g_{l+u+1+(i-1)K} b_{n-i}^{(K-1-l)} \oplus_L \sum_{l=0}^{\alpha_F-1} g_{l+u+1+\alpha_I K} b_{n-\alpha_I-1}^{(K-1-l)}$$

wherein $\oplus_L$ denotes the modulo L operation.

10. Source device (2) for transmitting K input streams of input symbols ($a^{(u)}_n$) to a destination device (3) through a partial response modulation channel (10) represented by a line coding filter of $L_c$ taps denoted $g_i$, with i comprised in the range [1, $L_c$], comprising:

    - a precoder (4) according to claim 9 for precoding the K input streams of input symbols into K output streams of output symbols,
    - a multiplexer (5) for multiplexing the output symbols for serial transmission into the partial response modulation channel (10).

11. System (1) comprising a source device (2) according to claim 10 and a destination device (3) comprising a symbol detector (8) and a demultiplexer (9).

FIG. 1

FIG. 2

FIG. 3

FIG. 4

Europäisches
Patentamt

European
Patent Office

Office européen
des brevets

**EUROPEAN SEARCH REPORT**

Application Number

EP 14 30 5957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/061660 A1 (KONISHI YOSHIAKI [JP] ET AL) 15 March 2007 (2007-03-15)<br>* abstract *<br>* figures 1,2,4,6-16 *<br>* paragraph [0005] - paragraph [0007] *<br>* paragraph [0011] - paragraph [0023] *<br>----- | 1-11 | INV.<br>H04L25/03<br>H04L25/497 |
| A | EP 0 304 081 A2 (NEC CORP [JP]) 22 February 1989 (1989-02-22)<br>* abstract *<br>* column 2, line 6 - line 40 *<br>* figures 1-4 *<br>----- | 1-11 | |
| A | US 5 311 547 A (WEI LEE-FANG [US]) 10 May 1994 (1994-05-10)<br>* abstract *<br>* figures 1,4,6,9 *<br>----- | 1-11 | |

TECHNICAL FIELDS
SEARCHED     (IPC)

H04L

The present search report has been drawn up for all claims

| Place of search | Date of completion of the search | Examiner |
|---|---|---|
| Munich | 9 December 2014 | Schiffer, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 958 289 A1**

**ANNEX TO THE EUROPEAN SEARCH REPORT
ON EUROPEAN PATENT APPLICATION NO.** EP 14 30 5957

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2014

| Patent document cited in search report | | Publication date | Patent family member(s) | | Publication date |
|---|---|---|---|---|---|
| US 2007061660 | A1 | 15-03-2007 | JP | 4675721 B2 | 27-04-2011 |
| | | | JP | 2007067904 A | 15-03-2007 |
| | | | US | 2007061660 A1 | 15-03-2007 |
| EP 0304081 | A2 | 22-02-1989 | AU | 607252 B2 | 28-02-1991 |
| | | | CA | 1332452 C | 11-10-1994 |
| | | | DE | 3889810 D1 | 07-07-1994 |
| | | | DE | 3889810 T2 | 08-09-1994 |
| | | | EP | 0304081 A2 | 22-02-1989 |
| | | | JP | H0748675 B2 | 24-05-1995 |
| | | | JP | S6451725 A | 28-02-1989 |
| | | | US | 5093843 A | 03-03-1992 |
| US 5311547 | A | 10-05-1994 | CA | 2085272 A1 | 04-08-1993 |
| | | | JP | 2665124 B2 | 22-10-1997 |
| | | | JP | H06209306 A | 26-07-1994 |
| | | | US | 5311547 A | 10-05-1994 |

EPO FORM P0459

For more details about this annex : see Official Journal of the European Patent Office, No. 12/82